# EUROPEAN PATENT APPLICATION

(11) **EP 2 256 702 A1**
(43) Date of publication of application: **01.12.2010**
(21) Application number: 09161430.5
(22) Date of filing: 28.05.2009
(51) Int. Cl.: G07F 7/10, G06K 1/14, G06K 17/00

(54) **Portable card writer, card system and method of using a protable card writer**

(71) Applicant: Pakhomov, Dmitri, 92260 Fontenay-aux-Roses (FR)
(72) Inventor: Pakhomov, Dmitri, 92260 Fontenay-aux-Roses (FR)
(74) Representative: Ganahl, Bernhard

(57) **Abstract**

The invention relates to a portable card writer (1) for writing data in a storage medium (12) of a card comprising a memory (18) for storing data sets of a plurality of cards, a writing head (14) for writing data in the storage medium (12), a control unit (17, 18) for controlling the reading of a data set from the memory (18) or a remote data server and for writing said data set in the storage medium (12) of a card, and an input device (3) for selecting a data set of a specific card and for initiating the writing of the selected data in the storage medium (12) of a multi-purpose card (11).

## Description

The invention relates to a portable card writer, a card system and a method of using such a portable card writer.

A "card" is any pocket-sized card with at least one writable storage medium. The storage medium can be a magnetic stripe and/or an integrated circuit or any other storage medium. The card can additionally comprise an only readable storage medium. In particularly, the card is a magnetic stripe card according to one or more of the standards ISO 7810, ISO 7811, ISO 7812, ISO 7813, ISO 4909. These standards define the physical properties of the card, including size, flexibility, location of the magnetic stripe and magnetic characteristics. They also provide the standards for financial cards, including the allocation of card number ranges to different card issuing institutions. The card may also be a combination of a magnetic stripe card and a card with an integrated circuit which is called "smart card"

A portable magnetic card reading and writing apparatus is disclosed in US 4,812,632. With this device a user can read the data stored on a magnetic stripe on a card and can input further data which are stored together with the original data onto the magnetic stripe of the card. There are many different kinds of magnetic card writers (e.g. JP 2005-203036 A, JP 2000-057268 A, JP 10-134131 A).

EP 0 827 109 B1 describes a card processing device which is able to process a plurality of sorts of cards which are to be used for a plurality of applications. These cards can have a plurality of different functions. So it is well-known that shops issue prepaid cards with which the customer can pay for goods and services. Also, shops often employ a bonus system for customers by means of cards. If the customer buys a good or service then bonus points are recorded on the corresponding card. There are different kinds of bonus cards which depend mostly on the kind of goods and services offered by the shop. This known device is able to process a plurality of different sorts of cards so that a shop owner needs just one device.

US 4,264,934 discloses a rate adaptive magnetic card writer for recording data on a card having a magnetic stripe. The card is manually moved along a magnetic head for writing data on the magnetic stripe. The rate of movement of the card is determined and then used in adjusting the writing of the data such that it occurs at a rate generally consistent with the speed of the card. This allows writing data on a magnetic stripe without the use of a drive mechanism. A similar manual magnetic card writer/reader is disclosed in JP 05-314292 A.

Smartcards comprise usually a storage section which is secured by an electronic signature which contains personalised data to identify the user of the smartcard. There are different kinds of methods known in the art to secure such storage sections. In CA 2 381 937 A1, EP 1 887 460 A2, and EP 1 451 759 B1 suitable methods for generating pseudo random numbers and true random numbers for providing an electronic signature and methods for checking the authenticity and the identity are described.

Besides the cards which are secured by an electronic signature there are used many card without any safety mechanism. These cards are mostly bonus cards which are due to there local restricted application and to the relatively low financial value which is stored on such cards not attractive for any counterfeiting. However, the types of the cards are permanently increasing so that many individuals are holding more than ten, twenty or even fifty cards. This is a real practical problem, as they often need a separate bag for carrying these cards besides their wallet. This problem is already known for some years. In the German utility model DE 202 16 436 U1 a smartcard is proposed having several integrated circuits (chips) with individual arrays of contact fields. With this smartcard many functions should be unified on one single card. However this kind of smartcard needs a special reader which is able to read out the different contact arrays.

To avoid the usage of a card the BMW group and NXP Semiconductor presented an electronic car key comprising the function of a credit card. This car key uses a special safety chip with the number "P5CD081". This car key replaces one single credit card.

The invention is therefore based on the object of providing a portable card writer, a card system and a method of using such a portable card writer which eliminates the necessity to use many different kinds of cards.

The object is achieved by a portable card writer according to claim 1, a card system according to claim 11 and a method according to claim 13. Advantageous embodiments of the invention are specified in the corresponding sub claims.

This object is solved by a portable card writer for writing data in a storage medium of a card comprising
a memory for storing data sets of several cards,
a writing head for writing data in the storage medium,
a control unit for controlling the reading of a data set from the memory and for writing said data set in the storage medium of a card, and
an input device for selecting a data set of a specific card and for initiating the writing of the selected data in the storage medium of a card.

With such a portable card writer it is possible to use just one multi-purpose card for different cashs. If a user receives a bonus card from a certain shop having such a storage medium he can read with any card reader the content of the storage medium and store the data that are read out of the certain bonus card into the memory of the portable card writer. As the memory of the portable card writer is embodied to store data sets of a plurality of cards the user can store the data content of all his cards having the same kind of storage medium. If the user wants to use such a card he does not need to take with him all physical cards but just one multi-purpose card together with the portable card writer. If required the user can select the dataset of a certain card and write this dataset by means of the portable card writer into the storage medium of the multi-purpose card. Then he can use the multi-purpose card as substitute of the card of which he has selected the dataset. This means that the user only needs to carry the portable card writer and one single multi purpose card with him for using a plurality of different cards. Advantageously the portable card writer is integrated in a ordinary portable electronic device, such as a mobile phone, a PTA, a portable PC, a portable GPS system, etc., so that the user does not need to carry an additional device with him. Practically, the user can replace a plurality of cards by the present invention by a modified portable electronic device into which the portable card writer is integrated and one single multi-purpose card.

Preferably the multi-purpose card is embodied in such a way that only this single type of multi-purpose card can be used together with the portable card writer. Particularly, the multi-purpose card is provided with a non deletable safety-code which is advantageously encrypted. The card reader is provided with means to identify the allowed multi-purpose card. This means decrypt the safety-code and checks it whether it is the correct safety-code. This secures that the portable card writer is not used to write any other cards than the allowed type of multi-purpose cards.

According to a preferred embodiment of the invention the portable card writer comprises a display for displaying an image of a scanned surface of a card and/or for displaying a bar code. Such a display allows the user of the portable card writer to identify himself as the owner of the original card which is replaced by the multi-purpose card. A salesman of a shop will recognize the image of the original card and thus more readily accept the multi-purpose card as substitute for the original card.

The portable card writer comprises advantageously an optical scanner for scanning the surface of a card and/or a card reader for reading the data on the storage medium of a card. With such a optical scanner and/or a card reader it is possible to enter the relevant data (image or stored dataset) into the portable card writer. Basically, it is possible to scan the surface of a card with any optical scanner and/or to read the dataset stored in the storage medium of a card with any card reader and to transfer the corresponding data via in interface into the memory of the portable card writer. However, an integrated optical scanner and/or an integrated card reader are advantageously embodied for automatically formatting the scanned surface of a card and/or the read out data set of a card in an appropriate format and to store and administrate the corresponding data on the memory of the portable card writer. E.g. the images of the surface of a card shall have a certain size and resolution being optimised for displaying the image on the display of the portable card writer and corresponding to a certain graphical standard like giff or jpeg. This allows to keep the capacity of the memory low even if a large number of images and datasets of cards are stored and administrated on the portable card writer.

The data sets of the cards contain often sensitive personalised data so that it is advisable to secure the data on the portable card writer by a safety mechanism, particularly an identification device for identifying the user, such as a fingerprint reader or an iris-scanner Such identification devices for identifying the user are also called personalized identificator.

In a preferred embodiment the multi-purpose card shall only be usable for a certain period of time , e.g. fifteen minutes, twenty minutes or thirty minutes, or only for a limited number of operations to avoid any misuse. This can be realised in two different ways. Firstly, in the storage medium of the card a time limit is be written until then the card is valid. If the time limit is terminated the the card can not be used. Secondly, the portable card writer of such an embodiment comprises a timer which is started when the corresponding dataset is written into the storage medium of the multi-purpose card. The writing head of the portable card writer is also embodied for deleting data in the storage medium of the multi-purpose card. This can be accomplished by overwriting the data in the storage medium by a certain data without any content. If the data of the multi-purpose card are deleted during the predetermined time period then the timer is stopped. If the time period ends without deleting the data on the multi purpose card then an alarm is initiated. This alarm can be an acoustical alarm signal and/or an optical alarm signal being output of the portable card writer. The alarm can also comprise an automatic message (SMS, email, etc.) which is sent to the distributor of said card to cancel the further use of this specific card.

The number of limited operations is preferably lower than five and most preferably only one. This can be accomplished e.g. by means of a smart card which counts the number of operations and if the allowed number of operations are exceeded then the card is self deactivating.

Preferably, a multi-purpose card is used having an unsecured section and a secured section. In the unsecured section the datasets of the plurality of cards can be repeatedly rewritten. The secured section comprises personalised information which identifies the owner of the multi-purpose card. The unsecured section and the secured section can be embodied on the same storage medium, e.g. a semi-conductor storage (chip) or can be embodied in two different storage mediums, wherein the secured section is preferably located in a semi-conductor storage and the unsecured section is embodied as magnetic stripe storage medium. Such a multi-purpose card can be for example an official ID-card, the driver license card or a bank account card having a chip with a secured section in which the personalised sensitive data are stored and which is secured by means of a sophisticated encryption algorithm. This card is provided with an additional storage medium such as a magnetic stripe into which the datasets of the plurality of cards can be sequentially stored by means of the portable card writer according to the present invention. Thus, the additional storage medium on the official or semi-official card replaces in combination with the portable card writer a plurality of cards such as bonus cards, debit cards or any other card with a lower level of security requirement.

Personalised information (PIN), biometrical information (finger print, iris scan) can be stored on the multi-purpose card. Such personalised information can also be stored in the portable card writer or on additional cards (like SIM card in a mobile phone) which is mounted inside the portable card writer, or on a remote storage device. If the personalised information is not stored on the multi-purpose card a personalised data can be deduced from the stored personalised information and written onto the multi-purpose card. This personalised data can be adapted to the corresponding application. If there is no security requirement then the personalised data comprises only the first name and the family name of the user. If there are low security requirements an additional code is added, e.g. the passport number of the user. If a high level security is required the an electronic signature is added. This electronic signature can be created in the portable card writer. There are different formats of electronic signatures. The protable card writer is adapted to use an format being appropriate for the kind of use of the multi purpose card.

Multi-purpose card may also contain an reprogrammable RFID module and be used for example as access key for particular areas in a company or factory, as identifier for time registration system, or as a key in a hotel.

A further embodiment of the portable card writer is designed for using cards for payments which are carried out by a payment institute e.g. a bank. Such cards are typically credit cards and other bank cards. The handling of these cards requires a high security standard. Advantageously the multi-purpose card used for substituting such payment cards are provided with a secured memory section containing personalized data of the user so that the user can be identified and authorized by means of this card. Preferably, the portable card writer sends an electronic message to a payment institute if the multi purpose card is written with the data set of the payment card of this payment institute. The payment institute allows a limited number of financial transactions and/or a limited time period to carry out these transactions with this payment card following this message. As an example the time period can be some minutes, half an hour or about an hour and the limited numbers of transactions can be one, two or three. This message comprises preferably an electronic signature of the user.

In a preferred embodiment portable card writer is also equipped with a secured transmitting system (secured IP connection) allowing very sensitive personalised information (e.g.bank accounts) to be kept in a secured remote information server. When needed, the owner of the portable writer and multipurpose card request stored information from the server for the specific operation (e.g. payment by bank card). As soon as operation is performed, information is automatically deleted from the card and portable writer. Additionally it is possible that one may image that the operation is performed only in case that such request from portable writer is coming to the secured information server in a certain time window in which also a corresponding request is received at the server of the corresponding business partner (= shop).

The invention is explained in more detail below by way of example with the aid of the drawings in which, schematically:
- Fig. 1 a, 1 b: show a mobile phone embodied as a portable card writer according to the present invention in a top view (Fig. 1 a) and a side view (Fig. 1 b),
- Fig 2: shows the mobile phone according to Fig. 1 a and 1 b in a cross sectional view along the line A-A in Fig. 1b,
- Fig 3: shows some major components of a portable card writer in a block dia- gram,

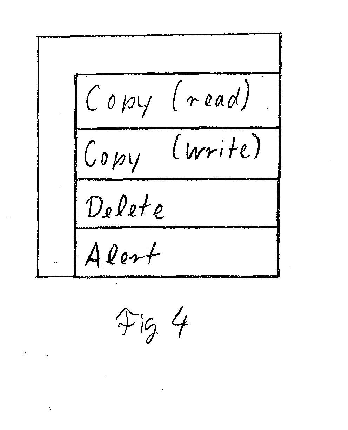

- Fig 4: shows some major functions of the software running in a portable card writer according to the present invention, and
- Fig. 5a, 5b: show a multi-purpose card in a front view (Fig. 5a) and a real view (Fig. 5b).

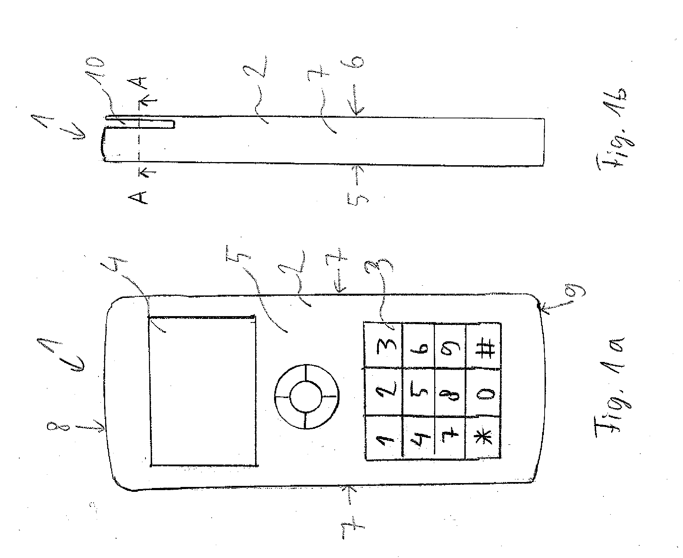

The present invention pertains to a portable card writer for writing data in a storage medium of pocket-sized cards. Such a portable card-writer is advantageously embodied in an portable electronic device such as a mobile phone, PDA, portable navigation system, etc. The embodiment shown in the drawings is a portable card writer 1 being embodied in a mobile phone. The portable card writer 1 has a housing 2 with a Keyboard 3 and a display 4 (Fig. 1a).

The housing has substantially the form of a cuboid with a front side 5, rear side 6, to lateral side walls 7, a top side wall 8 and a bottom side wall 9.

In the housing 2 a slit 10 is embodied which extends from the top side wall 8 substantially parallel to the front and rear side 5, 6 into the housing. The slit is arranged near to the rear side 6 and extents from one lateral side wall 7 to the other lateral side wall 7. The width of the slit 10 is sufficiently large to take up a portion of a common pocket sized card 11.

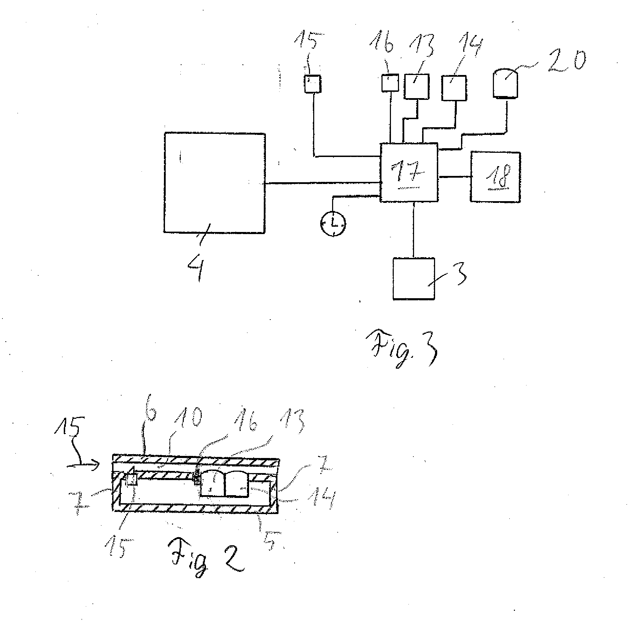

The portable card writer 1 comprises a means for writing and reading data onto and from a magnetic stripe 12 of a card element. These means are located adjacent to the slit 10, so that the magnetic stripe 12 of a card 11 can be read or written by pulling the card along through the slit 10. These means comprise a reading head 13 and a writing head 14 which are arranged inside the housing 2 with their active surfaces adjacent to the slit 10. The heads 13, 14 are arranged adjacent to each other and offset to the middle of the housing 2, so that the two heads 13, 14 are closer to the right lateral side wall in figure 2 than to the left lateral side wall 7. Two contact sensors 15, 16 are located adjacent to the slit 10, wherein the first contact sensor 15 is positioned distant from the heads 13, 14 and close to one of the lateral side walls 7. The second contact sensor 16 is located adjacent to the reading head 13 and in about the middle of the housing 2.

The portable card writer 1 is controlled by means of a microprocessor comprising a CPU 17 and a memory 18 which comprises at least one non-volatile memory chip. The CPU is connected with the keyboard 3, display 4, reading head 13, writing head 14, first contact sensor 15 and second contact sensor 16.

Furthermore, the CPU 17 is connected with a timer 19 and an optical scanner 20. The optical scanner 20 is a line camera which is located adjacent to the top side wall 8. The top side wall 8 is transparent and the optical scanner 20 is directed with its sensitive service to the top side wall 8 so that a surface can be optically scanned by sweeping the top side wall 8 of the portable card writer along the surface.

The reading and writing of data from and onto the magnetic stripe 12 of a card 11 is performed by pulling the card 11 with the magnetic stripe 12 through the slit 10 alongside the reading head 13 and the writing head 14 in a pulling direction 21. The first contact sensor 15 is firstly triggered by a front edge of the card. When the card reaches about the middle of the slit 10 then it triggers with its front edge the second contact sensor 16. The time difference between the two trigger signals of the tow contact sensors 15, 16 is detected. When the card 11 passes with its rear edge the contact sensors 15, 16 then the contact sensors 15, 16 are released. The time difference between the release time of the two contact sensors 15, 16 is also detected. The trigger time difference and the release time difference are inversely proportional to the speed with which the card is pulled through the slit 10. Thus, a value corresponding to the speed can be deduced from the trigger time difference and/or the release time difference. The writing and reading is controlled in dependence of the thus calculated speed.

If the release time difference corresponds substantially to the trigger time difference then it can be concluded that the card is pulled with a substantial constant speed through the slit 10. The writing and reading of data from and onto the magnetic stripe is only carried out when the pulling speed is substantially constant. This is checked by comparing the trigger time difference with the release time difference. If the two time differences distinguishes from each other more than a certain threshold value then the user is asked to pull again the card through the slit.

In the following the use of a portable card writer according to the invention in combination with a multi-purpose card is explained.

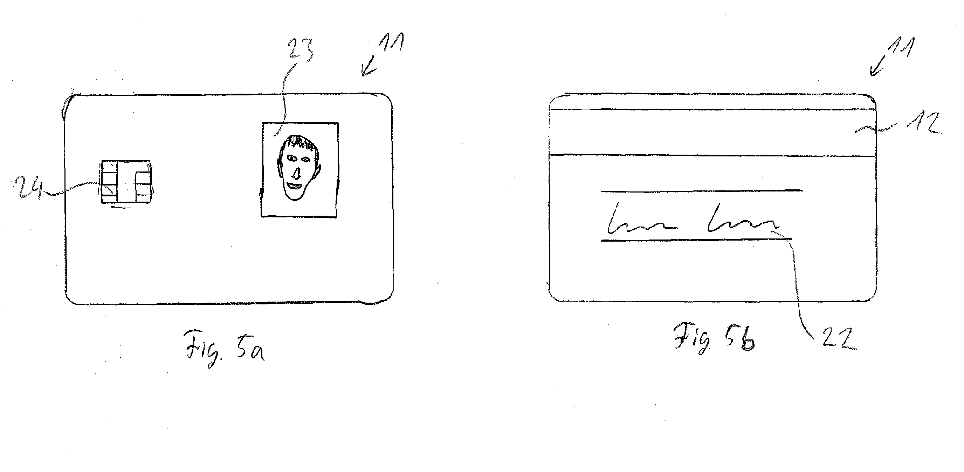

The user owns a multi-purpose card which is a pocket sized card having a storage medium on which data can be repeatedly written. Such a storage medium is preferably a magnetic stripe 12. The magnetic stripe 12 is typically arranged on the rear side of the card 11 (Fig. 5b). The rear side of the card comprises a section 22 for the users signature. The front side comprises a passport picture 23 of the user and contact elements 24 which are electrically connected with a chip being integrated in the card 11. The chip comprises a secured section in which personalised data of the user are stored. The secured section is secured by means of a sophisticated encryption algorithm.

Such a card can be issued as bank card, ID card, driving license, etc. However, it is necessary that the card 11 comprises a storage medium into which data can be written without restriction. In the present embodiment this storage medium is the magnetic stripe 12.

The usage of such an "ID-Card" as multi-purpose card provides the advantage that the user of this card can be reliable identified and authenticated by means of the data in the secured section. However, basically it is not necessary to use such an "ID card". A multi-purpose card can comprise only a readable and writable storage medium without any secured data section.

A user who receives a new card with such a magnetic stripe 12 selects in the portable card writer 1 the function "copy (read)" and pulls the magnetic stripe through the slit 10 in such a way that the content of the magnetic stripe 12 can be read by the reading head 13. The dataset read out from the new card is then automatically stored in the memory 18 of the portable card writer, wherein the storing is controlled by the CPU 17. The user is then weeping the top side wall 8 along the front surface of the new card, wherein the image of the front surface of the card is optically scanned by means of the optical scanner 20. The scanning is also controlled by the CPU 17. As the weeping is usually not done with exactly constant speed the image will be automatically corrected. The correction can be achieved e.g. by detecting certain symbols, such as characters, in the picture and by determining the deviation of an average size of the symbols and their typical form. From this it can be deduced which part of the detected picture shall be stretched or swaged and in which direction the picture shall be stretched or swaged. The corrected picture is then converted into a suitable format which provides a sufficient resolution but does not need too much memory capacity. This picture is then stored in the memory of the portable card writer and linked to the corresponding dataset read out from the magnetic stripe 12.

A plurality of different cards can be read out in such a way and the corresponding datasets and pictures are stored in the memory of the portable card writer.

If the user wants to shop in a specific shop he is selecting on the portable card writer the dataset of the card issued by this shop by means of the keyboard 3 of the portable card writer 1 and enters the function "copy (write)" which initiates the writing of the corresponding dataset into the storage medium 12 of the multi-purpose card 11. The user is then pulling the multi-purpose card through the slit so that the corresponding dataset is written into the magnetic stripe 12. The user hands out the multi-purpose card to the salesman of the shop who can read the content of the magnetic stripe with a corresponding card reader.

Sometimes the content of the dataset is changed by the shop, e.g. by changing the amount of bonus points. After finishing the buying process the user selects the function "restore" the data into the memory of the portable card writer. The user is again pulling the card through the slit 10. Thereby the eventually changed dataset is read out and stored in the memory of the portable card writer and the content of the magnetic stripe 12 is deleted by means of the writing head 14 which overwrites the present data with a certain pattern which does not have any meaning. Therefore it is advantageous that the reading head 13 is arranged in front of the writing head 14 in the pulling direction 21 so that it is possible to read from and to write to the magnetic stripe with pulling the card only once through the slit 10.

The multi-purpose card 11 is ready for a further use, as the memory stripe of the card is deleted. Thereby it is also secured that no data remains on the magnetic stripe which is not dedicated for a certain use. So no one can see when he is receiving the multi-purpose card the data of a different applications which has been carried out beforehand.

If the data in the storage medium of the multi-purpose card are not deleted after a certain time period then an alert can be initiated. The time period is measured by the timer 19 and its starts when the data are written into the storage medium. The duration of the time period is typically 10 minutes, 15 minutes, 20 minutes or 30 minutes. The alert can be an optical or an acoustical signal which is output by the portable card writer. The alert can also be an automatic message (SMS, email, etc.) which is sent to the issuer of the card to which the corresponding dataset belongs. Thereby the further use of the card can be automatically stopped.

The portable card writer may comprise a tray (not shown) for taking up a multi-purpose card.

The inventions is explained above by means of a specific embodiment. The invention is not restricted to this specific embodiment.

For example the above described embodiment comprises an optical scanner for scanning the surface of a card and/or a bar code. Instead of the optical scanner the portable card writer can be embodied with a camera for taking two-dimensional pictures. Such a camera comprises advantageously a macro-optic for close-up photography so that pictures of the surface of cards and/or of bar codes can be taken with a high sharpness.

For carrying out the method of using a multi-purpose card and the portable card writer it is not necessary that the card writer comprises a reading head. The issuer of the cards could issue instead of a physical card only the data set which has to be written into the storage medium of the card. The issuer can add a picture of the not physically existing card. The portable card writer is provided with an interface to receive the data set and the picture which are transmitted from the issuer into the portable card writer and stored in the memory. Thus the physical card can be replaced by a virtual card.

Alternatively, the portable card writer can be embodied with a wireless interface, such as Bluetooth or an infrared interface, which allows that the portable card writer communicates with a card reader of a shop directly via the wireless interface and without any card.

### List of references:

- 1: portable card writer
- 2: housing
- 3: keyboard
- 4: display
- 5: front side
- 6: rear side
- 7: lateral side wall
- 8: top side wall
- 9: bottom side wall
- 10: slit
- 11: card
- 12: magnetic stripe
- 13: reading head
- 14: writing head
- 15: contact sensor
- 16: contact sensor
- 17: CPU
- 18: memory
- 19: timer
- 20: optical scanner
- 21: pulling direction
- 22: section for signature
- 23: passport picture
- 24: contact elements

## Claims

1. Portable card writer (1) for writing data in a storage medium (12) of a card comprising
a memory (18) for storing data sets of a plurality of cards,
a writing head (14) for writing data in the storage medium (12),
a control unit (17, 18) for controlling the reading of a data set from the memory (18) and for writing said data set in the storage medium (12) of a card, and
an input device (3) for selecting a data set of a specific card and for initiating the writing of the selected data in the storage medium (12) of a multi-purpose card (11).

2. Portable card writer according to claim 1, comprising
a means for deleting a data set in the storage medium (12) of a card.

3. Portable card writer according to claim 1 or 2, comprising
a display (4) for displaying an image of a scanned surface of a card and/or for displaying a bar code.

4. Portable card writer according to any of the claims 1 to 3, comprising
an optical scanner (20) and/or a camera for scanning the surface of a card and/or for scann.

5. Portable card writer according to the claims 1 to 4, comprising
a reading head (13) for reading data from the storage medium (12), wherein the control unit is advantageously embodied for controlling the reading of a data set from a storage medium of a card and for the storing said data set into the memory (18).

6. Portable card writer according to one of the claims 1 to 5,
wherein the writing head (14) is embodied to read magnetic stripe cards, bar codes, and/or smart cards.

7. Portable card writer according to one of the claims 1 to 6, comprising
a wireless communication interface, including the possibility to communicate with a remote information server

8. Portable card writer according to one of the claims 1 to 7, comprising
an identification device like a fingerprint reader or an iris scanner.

9. Portable card writer according to one of the claims 1 to 8,
wherein the writing head (14) is also embodied for deleting data in the storage medium of the card.

10. Portable card writer according to one of the claims 1 to 9,
wherein the card writer is embodied in a mobile phone, a PDA, a portable PC or a portable navigation system or any other portable electronic device.

11. Card system comprising a portable card writer according to one of the claims 1 to 10 and a multi-purpose card (11) having a storage medium (12) into which repeatedly data can be written, wherein
the storage medium comprises preferably a secured section which contains personalized information and an unsecured section into which repeatedly data can be written.

12. Multi-purpose card for being used with a portable card writer as defined in one of the claims 1 to 10, wherein
the multi-purpose card is a pocket-sized card with at least one writable storage medium and a storage medium with a secured section in which a safety-code is non deletably stored to identify this multi-purpose card as allowed card to being used with the portable card writer.

13. Method of using a portable card writer according to one of the claims 1 to 10 wherein
data sets of a plurality of cards are stored in the memory of the portable card writer or transmitted from a remote information server, and
on demand a certain data set is selected by the user, wherein the selected data set is transmitted to a card reader via a multi-purpose card or via a wireless interface.

14. Method according to clam 13, wherein
the transmission of the data set by means of the multi-purpose card is carried out in that the data set is written by the portable card writer into a storage medium of the multi-purpose card and the multi-purpose card (11) is read by the card reader.

15. Method according to claim 13 or 14, wherein
a multi-purpose card is used having a storage medium (12) comprising a secured section which contains personalized information and an unsecured section and the card reader reads the secured section to identify the owner of the card.
